# EUROPEAN PATENT APPLICATION

(11) **EP 4 604 313 A1**
(43) Date of publication of application: **20.08.2025**
(21) Application number: 24755855.4
(22) Date of filing: 11.01.2024
(51) Int. Cl.: H01M 50/597, H01M 50/471

(54) **BATTERY**

(30) Priority: 16.02.2023 CN 202320248646 U
(71) Applicant: Zhuhai CosMX Battery Co., Ltd., Zhuhai, Guangdong 519180 (CN)
(72) Inventor: LIU, Chunyu, Zhuhai, Guangdong 519180 (CN); XIANG, Yu, Zhuhai, Guangdong 519180 (CN); SHENG, Donghui, Zhuhai, Guangdong 519180 (CN); XIE, Jichun, Zhuhai, Guangdong 519180 (CN)
(74) Representative: Murgitroyd & Company
(86) International application number: PCT/CN2024/071816
(87) International publication number: WO 2024/169480

(57) **Abstract**

Provided is a battery, including first and second battery cells, a packaging film and a separator. The packaging film includes first and second film housings, the separator is disposed between the first and second film housings, the first and second film housings are separated by the separator, and first and second accommodating cavities that are arranged in parallel are formed by the separator. The first battery cell is accommodated within the first accommodating cavity, and the second battery cell is accommodated within the second accommodating cavity. A plurality of sealing edges are formed by the first and second film housings and the separator, and the plurality of sealing edges include a first sealing edge where tabs of the first and second battery cells are located. A thickness of a hot melt adhesive on the first sealing edge at a side, close to the separator, of a tab of each battery cell of at least one of the first and second battery cells is greater than a thickness of a hot melt adhesive on the first sealing edge at a side, away from the separator, of the tab of the battery cell, which ensures that a certain distance is maintained between a packaging film and a non-separator side of a tab after sealing, so as to reduce a risk of contact short circuits at the tab, thereby improving a safety of a battery.

## Description

### TECHNICAL FIELD

The present application relates to the field of battery technologies, and in particular, to a battery.

### BACKGROUND

A method for improving a working voltage of lithium-ion batteries generally includes: connecting a plurality of identical battery cells in series. In the related art, a separator is usually used to separate and package two identical battery cells that are disposed in parallel. However, since packaging is performed after the separator is added, structures on two sides of a tab become asymmetric after the packaging, such that a non-separator side of the tab is closer to a packaging film (for example, an aluminum laminate film). This makes it impossible to ensure that a safe distance is maintained between the aluminum laminate film and the non-separator side of the tab, thereby resulting in a high risk of contact short circuits at the tab and ultimately resulting in a low safety of a battery.

### SUMMARY

Embodiments of the present application provide a battery, to solve a problem in that, it is impossible to ensure a safe distance between a packaging film (for example, an aluminum laminate film) and a non-separator side of a tab, thereby resulting in a high risk of contact short circuits at the tab and ultimately resulting in a low safety of a battery.

In a first aspect, embodiments of the present application provide a battery, including a first battery cell, a second battery cell, a packaging film and a separator; the packaging film includes a first film housing and a second film housing, the separator is disposed between the first film housing and the second film housing, the first film housing and the second film housing are separated by the separator, and a first accommodating cavity and a second accommodating cavity that are arranged in parallel are formed by the separator; the first battery cell is accommodated within the first accommodating cavity, and the second battery cell is accommodated within the second accommodating cavity; a plurality of sealing edges are formed by the first film housing, the separator and the second film housing, and the plurality of sealing edges include a first sealing edge where a tab of the first battery cell and a tab of the second battery cell are located; and a thickness of a hot melt adhesive on the first sealing edge at a side, close to the separator, of a tab of each battery cell of at least one of the first battery cell and the second battery cell is greater than a thickness of a hot melt adhesive on the first sealing edge at a side, away from the separator, of the tab of the battery cell.

Optionally, a first side of the tab of the first battery cell is a side, close to the separator, of the tab of the first battery cell, a second side of the tab of the first battery cell is a side, away from the separator, of the tab of the first battery cell, and the thickness of the hot melt adhesive on the first sealing edge at the first side of the tab of the first battery cell is greater than the thickness of the hot melt adhesive on the first sealing edge at the second side of the tab of the first battery cell.

Optionally, the hot melt adhesive on the first sealing edge at the first side of the tab of the first battery cell includes a first tab adhesive layer, the separator and a first resin layer that are stacked sequentially, and the hot melt adhesive on the first sealing edge at the second side of the tab of the first battery cell includes a second tab adhesive layer and a second resin layer that are stacked sequentially, where the first tab adhesive layer and the second tab adhesive layer are located on both sides of the tab of the first battery cell, and the first resin layer and the second resin layer are film layers, close to the tab of the first battery cell, of the packaging film.

Optionally, a ratio of the thickness of the hot melt adhesive on the first sealing edge at the first side of the tab of the first battery cell to the thickness of the hot melt adhesive on the first sealing edge at the second side of the tab of the first battery cell is between 1.01 and 5.

Optionally, a difference between the thickness of the hot melt adhesive on the first sealing edge at the first side of the tab of the first battery cell and the thickness of the hot melt adhesive on the first sealing edge at the second side of the tab of the first battery cell ranges from 10 µm to 500 µm.

Optionally, a first side of the tab of the second battery cell is a side, away from the separator, of the tab of the second battery cell, a second side of the tab of the second battery cell is a side, close to the separator, of the tab of the second battery cell, and the thickness of the hot melt adhesive on the first sealing edge at the second side of the tab of the second battery cell is greater than the thickness of the hot melt adhesive on the first sealing edge at the first side of the tab of the second battery cell.

Optionally, the hot melt adhesive on the first sealing edge at the first side of the tab of the second battery cell includes a third tab adhesive layer and a first resin layer that are stacked sequentially, and the hot melt adhesive on the first sealing edge at the second side of the tab of the second battery cell includes a fourth tab adhesive layer, the separator and a second resin layer that are stacked sequentially, where the third tab adhesive layer and the fourth tab adhesive layer are located on both sides of the tab of the second battery cell, and the first resin layer and the second resin layer are film layers, close to the tab of the second battery cell, of the packaging film.

Optionally, a ratio of the thickness of the hot melt adhesive on the first sealing edge at the second side of the tab of the second battery cell to the thickness of the hot melt adhesive on the first sealing edge at the first side of the tab of the second battery cell is between 1.01 and 5.

Optionally, a difference between the thickness of the hot melt adhesive on the first sealing edge at the first side of the tab of the second battery cell and the thickness of the hot melt adhesive on the first sealing edge at the second side of the tab of the second battery cell ranges from 10 µm to 500 µm.

Optionally, a first side of the tab of the first battery cell is a side, close to the separator, of the tab of the first battery cell, a first side of the tab of the second battery cell is a side, away from the separator, of the tab of the second battery cell, and the thickness of the hot melt adhesive on the first sealing edge at the first side of the tab of the first battery cell is greater than the thickness of the hot melt adhesive on the first sealing edge at the first side of the tab of the second battery cell.

Optionally, a second side of the tab of the first battery cell is a side, away from the separator, of the tab of the first battery cell, a second side of the tab of the second battery cell is a side, close to the separator, of the tab of the second battery cell, and the thickness of the hot melt adhesive on the first sealing edge at the second side of the tab of the first battery cell is less than the thickness of the hot melt adhesive on the first sealing edge at the second side of the tab of the second battery cell.

Optionally, a first side of the tab of the first battery cell is a side, close to the separator, of the tab of the first battery cell, a second side of the tab of the second battery cell is a side, close to the separator, of the tab of the second battery cell, and the thickness of the hot melt adhesive on the first sealing edge at the first side of the tab of the first battery cell is equal to the thickness of the hot melt adhesive on the first sealing edge at the second side of the tab of the second battery cell.

Optionally, a second side of the tab of the first battery cell is a side, away from the separator, of the tab of the first battery cell, a first side of the tab of the second battery cell is a side, away from the separator, of the tab of the second battery cell, and the thickness of the hot melt adhesive on the first sealing edge at the second side of the tab of the first battery cell is equal to the thickness of the hot melt adhesive on the first sealing edge at the first side of the tab of the second battery cell.

Optionally, the plurality of sealing edges further includes a second sealing edge, a third sealing edge and a fourth sealing edge, the second sealing edge and the first sealing edge are disposed opposite to each other, and the third sealing edge and the fourth sealing edge are disposed opposite to each other; and compression ratios of the first sealing edge, the second sealing edge, the third sealing edge and the fourth sealing edge are all between 3% and 97%.

Optionally, the separator includes a first region recessed toward a bottom of the first film housing, and a distance between the first region and the second film housing is equal to an accommodating depth of the first film housing.

Optionally, the accommodating depth of the first film housing is greater than an accommodating depth of the second film housing.

Optionally, the separator further includes a second region recessed toward a bottom of the second film housing, and a distance between the second region and the bottom of the first film housing is equal to the distance between the first region and the second film housing.

In the embodiments of the present application, the battery includes the first battery cell, the second battery cell, the packaging film and the separator, the packaging film includes the first film housing and the second film housing, the separator is disposed between the first film housing and the second film housing, the first film housing and the second film housing are separated by the separator, and the first accommodating cavity and the second accommodating cavity that are arranged in parallel are formed by the separator; the first battery cell is accommodated within the first accommodating cavity, and the second battery cell is accommodated within the second accommodating cavity; the plurality of sealing edges are formed by the first film housing, the separator and the second film housing, and the plurality of sealing edges include the first sealing edge where the tab of the first battery cell and the tab of the second battery cell are located; and a thickness of a hot melt adhesive on the first sealing edge at a side, close to the separator, of a tab of each battery cell of at least one of the first battery cell and the second battery cell is greater than a thickness of a hot melt adhesive on the first sealing edge at a side, away from the separator, of the tab of the battery cell. In this way, this ensures that a certain distance is maintained between a packaging film (for example, an aluminum laminate film) and a non-separator side of a tab after sealing, so as to reduce a risk of contact short circuits at the tab, thereby improving a safety of a battery.

### BRIEF DESCRIPTION OF THE DRAWINGS

In order to more clearly illustrate technical solutions of the present application, the following briefly describes the accompanying drawings required in the description of embodiments of the present application. Obviously, the accompanying drawings in the following description are only some embodiments of the present application, and as for a person of ordinary skill in the art, other accompanying drawings may also be obtained according to these accompanying drawings without creative efforts.
FIG. 1 is a schematic structural diagram of a battery before packaging according to an embodiment of the present application.
FIG. 2 is a cross-sectional schematic diagram of the battery of FIG. 1.
FIG. 3 is a schematic structural diagram of a battery after packaging according to an embodiment of the present application.
FIG. 4 is a schematic structural diagram of a battery according to another embodiment of the present application.
FIG. 5 is a schematic diagram of a sealing head structure adapted to a tab structure during sealing according to an embodiment of the present application.

### DETAILED DESCRIPTION OF THE EMBODIMENTS

The following clearly and completely describes the technical solutions in the embodiments of the present application with reference to the accompanying drawings in the embodiments of the present application. Obviously, the described embodiments are a part rather than all of the embodiments of the present application. All other embodiments obtained by a person of ordinary skill in the art based on the embodiments of the present application without creative efforts shall fall within the protection scope of the present application.

Unless otherwise defined, technical terms or scientific terms used in the present application should have the common meanings understood by one of ordinary skill in the art to which the present application belongs. The terms "first", "second", and similar terms used in the present application do not indicate any order, quantity or importance, but are merely used to distinguish different components. Likewise, the similar terms such as "a" or "an" do not denote a quantity limitation, but indicate that there is at least one. The similar terms such as "connect" or "join" are not limited to physical or mechanical connections, but may include electrical connections, whether direct or indirect. The terms "up", "down", "left", "right", etc. are only used to represent a relative positional relationship, and when an absolute position of a described object changes, the relative positional relationship also changes correspondingly.

Taking two identical battery cells that are disposed in parallel as an example, a Z-shaped separator is disposed between two packaging housings of equal size, the separator is then in sealed connection to the upper packaging housing and the lower packaging housing, respectively, to realize packaging, and finally the two battery cells are disposed within an accommodating cavity formed by the separator and the upper packaging housing, and an accommodating cavity formed by the separator and the lower packaging housing, respectively. However, since the packaging is performed after the separator is added, structures on two sides of a tab become asymmetric after the packaging, such that a non-separator side of the tab is closer to a packaging film (for example, an aluminum laminate film). This makes it impossible to ensure that a safe distance is maintained between the aluminum laminate film and the non-separator side of the tab, thereby resulting in a high risk of contact short circuits at the tab and ultimately resulting in a low safety of a battery.

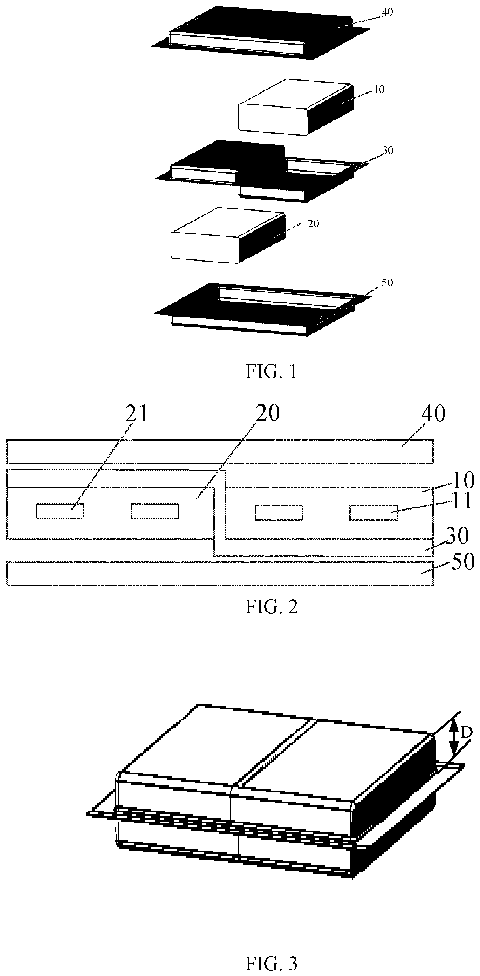

Referring to FIG. 1 to FIG. 3, embodiments of the present application provide a battery, including a first battery cell 10, a second battery cell 20, a packaging film and a separator 30; the packaging film includes a first film housing 40 and a second film housing 50, the separator 30 is disposed between the first film housing 40 and the second film housing 50, the first film housing 40 and the second film housing 50 are separated by the separator 30, and a first accommodating cavity and a second accommodating cavity that are arranged in parallel are formed by the separator 30; the first battery cell 10 is accommodated within the first accommodating cavity, and the second battery cell 20 is accommodated within the second accommodating cavity; a plurality of sealing edges are formed by the first film housing 40, the separator 30 and the second film housing 50, and the plurality of sealing edges include a first sealing edge where a tab of the first battery cell 10 and a tab of the second battery cell 20 are located; and a thickness of a hot melt adhesive on the first sealing edge at a side, close to the separator, of a tab of each battery cell of at least one of the first battery cell and the second battery cell is greater than a thickness of a hot melt adhesive on the first sealing edge at a side, away from the separator, of the tab of the battery cell.

In some embodiments, a first side of the tab 11 of the first battery cell 10 is a side, close to the separator 30, of the tab 11 of the first battery cell 10, a second side of the tab 11 of the first battery cell 10 is a side, away from the separator 30, of the tab 11 of the first battery cell 10, and the thickness of the hot melt adhesive on the first sealing edge at the first side of the tab 11 of the first battery cell 10 is greater than the thickness of the hot melt adhesive on the first sealing edge at the second side of the tab 11 of the first battery cell 10.

In some other embodiments, a first side of the tab 21 of the second battery cell 20 is a side, away from the separator 30, of the tab 21 of the second battery cell 20, a second side of the tab 21 of the second battery cell 20 is a side, close to the separator 30, of the tab 21 of the second battery cell 20, and the thickness of the hot melt adhesive on the first sealing edge at the second side of the tab of the second battery cell is greater than the thickness of the hot melt adhesive on the first sealing edge at the first side of the tab of the second battery cell.

It should be understood that the separator 30 may be a Z-shaped structure, and the Z-shaped separator 30, the first film housing 40 and the second film housing 50 form two accommodating cavities that are arranged in parallel. The tab 11 of the first battery cell 10 disposed within the first accommodating cavity and the tab 21 of the second battery cell 20 disposed within the second accommodating cavity extend out of the first accommodating cavity and the second accommodating cavity respectively through different regions of the first sealing edge. It should be noted that the Z-shaped separator 30 also participates in packaging. During packaging, since the Z-shaped separator 30 may separate the two accommodating cavities, the Z-shaped separator 30 may also play a role in limiting the first battery cell 10 and the second battery cell 20, thereby further improving overall packaging strength.

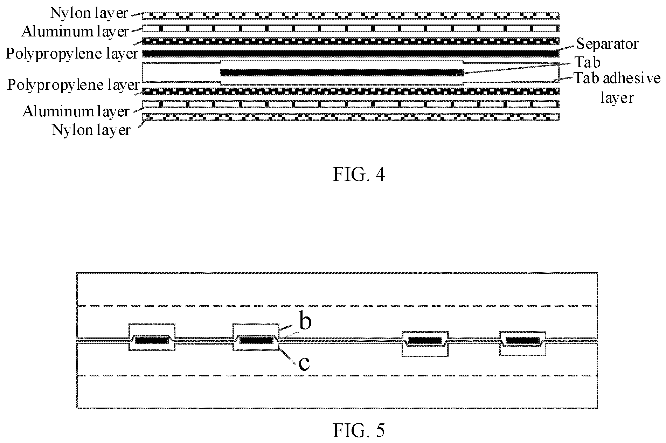

It should be understood that the first film housing 40 and the second film housing 50 may both be formed of aluminum laminate films. For example, as shown in FIG. 4, the aluminum laminate film may be composed of a PP (Polypropylene) layer, an aluminum layer and a nylon layer that are disposed sequentially, and the PP layer is located on a side close to the tab.

The separator 30 is the Z-shaped structure, such that the thickness of the hot melt adhesive on the first sealing edge at the first side of the tab 11 of the first battery cell 10 includes a thickness of a tab adhesive (i.e., a first tab adhesive layer) adhered to the first side of the tab 11 of the first battery cell 10, a thickness of the separator 30 and a thickness of a PP layer (i.e., a first resin layer) of the second film housing 50, and the thickness of the hot melt adhesive on the first sealing edge at the second side of the tab 11 of the first battery cell 10 includes a thickness of a tab adhesive (i.e., a second tab adhesive layer) adhered to the second side of the tab 11 of the first battery cell 10 and a thickness of a PP layer (i.e., a second resin layer) of the first film housing 40.

The first tab adhesive layer and the second tab adhesive layer are located on both sides of the tab of the first battery cell, and the first resin layer and the second resin layer are film layers, close to the tab of the first battery cell, of the packaging film. For example, the first resin layer is the film layer, close to the tab of the first battery cell, of the second film housing 50, and the second resin layer is the film layer, close to the tab of the first battery cell, of the first film housing 40.

Similarly, the thickness of the hot melt adhesive on the first sealing edge at the first side of the tab 21 of the second battery cell 20 includes a thickness of a tab adhesive (i.e., a third tab adhesive layer) adhered to the first side of the tab 21 of the second battery cell 20 and a thickness of a PP layer (i.e., a first resin layer) of the second film housing 50, and the thickness of the hot melt adhesive on the second side of the tab 21 of the second battery cell 20 includes a thickness of a tab adhesive (i.e., a fourth tab adhesive layer) on the second side of the tab 21 of the second battery cell 20, a thickness of the separator 30, and a thickness of a PP layer (i.e., a second tab adhesive layer) of the first film housing 40.

The third tab adhesive layer and the fourth tab adhesive layer are located on both sides of the tab of the second battery cell, the first resin layer and the second resin layer are film layers, close to the tab of the second battery cell, of the packaging film. For example, the first resin layer is the film layer, close to the tab of the second battery cell, of the second film housing 50, and the second resin layer is the film layer, close to the tab of the second battery cell, of the first film housing 40.

It should be noted that the separator 30 may be divided into a single-layer structure or a multi-layer composite structure, so as to meet different requirements of different battery structures. For example, a material of the separator 30 with the single-layer structure includes a polymer material or a carbon material; and a material of the separator 30 with the multi-layer composite structure includes a metal material of an intermediate layer, a polymer material or a carbon material of an outer layer, and a polymer material of a bonding layer located between the intermediate layer and the outer layer. The intermediate layer is used for separation and support, the outer layer is used for insulation, and the bonding layer is used for bonding the intermediate layer to the outer layer.

The metal material may include at least one of Ni, Ti, Cu, Ag, Au, Pt, Fe, Co, Cr, W, Mo, Al, Mg, K, Na, Ca, Sr, Ba, Si, Ge, Sb, Pb, In, Zn, Stainless Steel (SUS), and their compounds or alloys, etc.; the polymer material may include at least one of polyethylene terephthalate, polybutylene terephthalate, polyethylene naphthalate, polyether ether ketone, polyimide, polyamide, polyethylene glycol, polyamide-imide, polycarbonate, cyclic olefin copolymer, polyphenylene sulfide, polyvinyl acetate, polytetrafluoroethylene, polynaphthylene methylene, polyvinylidene fluoride, polyethylene furanoate, polypropylene carbonate, poly (vinylidene fluoride- co-hexafluoropropylene), poly (vinylidene fluoride-co-chlorotrifluoroethylene), silicone, vinylon, polypropylene, maleic anhydride-modified polypropylene, polyethylene, ethylene and its copolymers, polyvinyl chloride, polystyrene, polyether nitrile, polyurethane, polyphenylene oxide, polyester, polysulfone, amorphous alpha-olefin copolymer and their derivatives; and the carbon material may include at least one of carbon felt, carbon film, carbon black, acetylene black, fullerene, conductive graphite film or graphene film.

In the embodiments of the present application, the battery includes the first battery cell 10, the second battery cell 20, the packaging film and the separator 30. The packaging film includes the first film housing 40 and the second film housing 50, the separator 30 is disposed between the first film housing 40 and the second film housing 50, the first film housing 40 and the second film housing 50 are separated by the separator 30, and the first accommodating cavity and the second accommodating cavity that are arranged in parallel are formed by the separator 30. The first battery cell 10 is accommodated within the first accommodating cavity, and the second battery cell 20 is accommodated within the second accommodating cavity. The plurality of sealing edges are formed by the first film housing 40, the separator 30 and the second film housing 50, and the plurality of sealing edges include the first sealing edge where the tab of the first battery cell 10 and the tab of the second battery cell 20 are located. The thickness of the hot melt adhesive on the first sealing edge at the first side of the tab 11 of the first battery cell 10 is greater than the thickness of the hot melt adhesive on the first sealing edge at the second side of the tab 11 of the first battery cell 10, where the first side of the tab 11 of the first battery cell 10 is the side, close to the separator 30, of the tab 11 of the first battery cell 10, and the second side of the tab 11 of the first battery cell 10 is the side, away from the separator 30, of the tab 11 of the first battery cell 10. The thickness of the hot melt adhesive on the first sealing edge at the first side of the tab 21 of the second battery cell 20 is less than the thickness of the hot melt adhesive on the first sealing edge at the second side of the tab 21 of the second battery cell 20, where the first side of the tab 21 of the second battery cell 20 is the side, away from the separator 30, of the tab 21 of the second battery cell 20, and the second side of the tab 21 of the second battery cell 20 is the side, close to the separator 30, of the tab 21 of the second battery cell 20. In this way, this ensures that a certain distance is maintained between an aluminum laminate film and a non-separator side of a tab after sealing, so as to reduce a risk of contact short circuits at the tab, thereby improving a safety of a battery.

In an optional embodiment, the hot melt adhesive on the first sealing edge at the first side of the tab 11 of the first battery cell 10 includes a tab adhesive layer, the separator, and a resin layer that are stacked sequentially, and the hot melt adhesive on the first sealing edge at the first side of the tab 21 of the second battery cell 20 includes a tab adhesive layer and a resin layer that are stacked sequentially; and the hot melt adhesive on the first sealing edge at the second side of the tab 11 of the first battery cell 10 includes a tab adhesive layer and a resin layer that are stacked sequentially, and the hot melt adhesive on the first sealing edge at the second side of the tab 21 of the second battery cell 20 includes a tab adhesive layer, the separator and a resin layer that are stacked sequentially.

In an optional embodiment, a ratio of the thickness of the hot melt adhesive on the first sealing edge at the first side of the tab 11 of the first battery cell 10 to the thickness of the hot melt adhesive on the first sealing edge at the second side of the tab 11 of the first battery cell 10 is between 1.01 and 5.

In an optional embodiment, a ratio of the thickness of the hot melt adhesive on the first sealing edge at the second side of the tab 21 of the second battery cell 20 to the thickness of the hot melt adhesive on the first sealing edge at the first side of the tab 21 of the second battery cell 20 is between 1.01 and 5.

In an optional implementation, the thickness of the hot melt adhesive on the first sealing edge at the first side of the tab 11 of the first battery cell 10 is greater than the thickness of the hot melt adhesive on the first sealing edge at the first side of the tab 21 of the second battery cell 20, and the thickness of the hot melt adhesive on the first sealing edge at the second side of the tab 11 of the first battery cell 10 is less than the thickness of the hot melt adhesive on the first sealing edge at the second side of the tab 21 of the second battery cell 20.

In another optional implementation, the thickness of the hot melt adhesive on the first sealing edge at the first side of the tab 11 of the first battery cell 10 is equal to the thickness of the hot melt adhesive on the first sealing edge at the second side of the tab 21 of the second battery cell 20.

In another optional implementation, the thickness of the hot melt adhesive on the first sealing edge at the second side of the tab 11 of the first battery cell 10 is equal to the thickness of the hot melt adhesive on the first sealing edge at the first side of the tab 21 of the second battery cell 20.

In an optional implementation, a difference between the thickness of the hot melt adhesive on the first sealing edge at the first side of the tab 11 of the first battery cell 10 and the thickness of the hot melt adhesive on the first sealing edge at the second side of the tab 11 of the first battery cell 10 ranges from 10 µm to 500 µm; and a difference between the thickness of the hot melt adhesive on the first sealing edge at the first side of the tab 21 of the second battery cell 20 and the thickness of the hot melt adhesive on the first sealing edge at the second side of the tab 21 of the second battery cell 20 ranges from 10 µm to 500 µm.

Optionally, the plurality of sealing edges further includes a second sealing edge, a third sealing edge and a fourth sealing edge, the second sealing edge and the first sealing edge are disposed opposite to each other, and the third sealing edge and the fourth sealing edge are disposed opposite to each other; and compression ratios of the second sealing edge, the third sealing edge and the fourth sealing edge are all between 3% and 97%.

It should be understood that the compression ratio is a ratio of a thickness of a sealing edge of the battery before packaging to a thickness of the sealing edge of the battery after packaging.

When the battery is of a square structure, i.e., the first film housing 40, the separator 30 and the second film housing 50 form four sealing edges, the first sealing edge is a sealing edge where the tabs of the two battery cells are located. The compression ratios of the other three sealing edges are all set between 3% and 97%, so that a thickness difference between the plurality of sealing edges after packaging is reduced, thereby improving packaging strength.

In an optional embodiment, the separator 30 includes a first region recessed toward a bottom of the first film housing 40.

It should be understood that, since the separator 30, the first film housing 40 and the second film housing 50 form the two accommodating cavities that are arranged in parallel, and the plurality of sealing edges formed by the first film housing 40, the separator 30 and the second film housing 50 are located on a same horizontal plane, when the first region of the separator 30 recesses toward the bottom of the first film housing 40, the second accommodating cavity is formed by the second film housing 50 and the first region of the separator 30. In this case, the second battery cell 20 is located on a side of the first region of the separator 30, and the first battery cell 10 is located on another side of the separator 30. An accommodating depth of the first film housing 40 is equal to a sum of a thickness of the first battery cell 10 and a thickness of the separator 30; or an accommodating depth of the first film housing 40 is equal to a sum of a thickness of the second battery cell 20 and a thickness of the separator 30, and an accommodating depth of the second film housing 50 is equal to 0.

In another optional embodiment, the separator 30 further includes a second region recessed toward a bottom of the second film housing 50, and a distance between the second region and the bottom of the first film housing 40 is equal to a distance between the first region and the bottom of the second film housing 50.

In this embodiment, the separator 30 is set to further include the second region recessed toward the bottom of the second film housing 50, the distance between the second region and the bottom of the first film housing 40 is also set to be the same as the distance between the first region and the bottom of the second film housing 50, and the thickness of the first battery cell 10 disposed on a side of the second region is also set to be the same as the thickness of the second battery cell 20 disposed on a side of the first region, thereby improving voltage stability of a battery.

Optionally, the accommodating depth of the first film housing 40 is greater than the accommodating depth of the second film housing 50.

It should be understood that, since a sum of the accommodating depth of the first film housing 40 and the accommodating depth of the second film housing 50 is equal to a sum of the thickness of the first battery cell 10, the thickness of the second battery cell 20 and the thickness of the separator 30, the accommodating depth of the first film housing 40 may be set greater than the accommodating depth of the second film housing 50, that is, the separator 30 is located on the plurality of sealing edges, and a distance between the separator 30 and the bottom of the first film housing 40 is greater than a distance between the separator 30 and the bottom of the second film housing 50.

In an optional implementation, the accommodating depth of the second film housing 50 is greater than or equal to 0.

Since the sum of the accommodating depth of the first film housing 40 and the accommodating depth of the second film housing 50 is equal to the sum of the thickness of the first battery cell 10, the thickness of the second battery cell 20 and the thickness of the separator 30, when the accommodating depth of the second film housing 50 is equal to 0, the accommodating depth of the first film housing 40 is the greatest. Correspondingly, a recessed depth of the first region of the separator 30 recessed toward the bottom of the first film housing 40 is the greatest, so that a space of the accommodating cavity formed by the separator 30 and the second film housing 50 may accommodate the second battery cell 20.

When the accommodating depth of the second film housing 50 is greater than 0, the accommodating depth of the first film housing 40 is related to the accommodating depth of the second film housing 50. Correspondingly, a recessed depth of the first region of the separator 30 recessed toward the bottom of the first film housing 40 is also related to the accommodating depth of the second film housing 50, which is not limited in this embodiment.

It should be understood that the accommodating depth mentioned in the present application is specifically the distance D shown in FIG. 3.

In addition, since the plurality of sealing edges of the battery provided in the embodiments of the present application have different compression ratios, a sealing head structure, configured to adapt to the sealing edges in the embodiments of the present application, may be used during thermal sealing.

It should be understood that, since thicknesses of melt adhesives on two sides of a tab of a battery cell are not equal after the battery cell is packaged with a separator, and the thickness of the melt adhesive on a separator side is greater than the thickness of the melt adhesive on another side by 10 µm to 500 µm, i.e., since an introduction of the separator brings asymmetry to a packaging structure of the tab of a battery, a multi-tab stepped sealing head, configured to adapt to the sealing edges in the embodiments of the present application, may be used during thermal sealing. For example, as shown in FIG. 5, a sum of a limit of an upper sealing head and a limit of a lower sealing head is equal to a sum of a value b of a limit on a separator side and a value c of a limit on a non-separator side, and b > c.

As shown in FIG. 4, the introduction of the separator brings asymmetry to the packaging structure of the tab of the battery, where the thickness of the melt adhesive on the separator side is greater than the thickness of the melt adhesive on the non-separator side. After sealing, a thickness of a melt adhesive layer on the separator side is equal to a sum of a thickness of a PP layer of an aluminum laminate film, a thickness of the separator and a thickness of a tab adhesive layer on a tab side, and a thickness of a melt adhesive layer on the non-separator side is equal to a sum of a thickness of a PP layer of an aluminum laminate film and a thickness of a tab adhesive layer on a tab side. On the separator side of the tab of the battery provided in the present application, a single-layer compression rate of the separator (i.e., the thickness of the melt adhesive) may be in a range of 3% to 97%, and a total thickness of the melt adhesive on the separator side of the tab is A1. A total thickness of the melt adhesive on the non-separator side of the tab is A2. A total compression rate is in a range of 3% to 97%, and a ratio of the thicknesses of the melt adhesives on two sides is A1/A2, which is between 1.01 to 5.

It should be understood that the compression ratio mentioned in the present application refers to a ratio of a thickness after an edge sealing process to a thickness before an edge sealing process.

The above are merely specific embodiments of the present application, but not intend to limit the protection scope of the present application. Any person skilled in the art can easily conceive of modification or replacement within the technical scope disclosed in the present application, which should all be covered within the protection scope of the present application. Therefore, the protection scope of the present application shall be subject to the protection scope of claims.

## Claims

1. A battery, comprising a first battery cell, a second battery cell, a packaging film and a separator,
wherein the packaging film comprises a first film housing and a second film housing, the separator is disposed between the first film housing and the second film housing, the first film housing and the second film housing are separated by the separator, and a first accommodating cavity and a second accommodating cavity that are arranged in parallel are formed by the separator;
the first battery cell is accommodated within the first accommodating cavity, and the second battery cell is accommodated within the second accommodating cavity;
a plurality of sealing edges are formed by the first film housing, the separator and the second film housing, and the plurality of sealing edges comprise a first sealing edge where a tab of the first battery cell and a tab of the second battery cell are located; and
a thickness of a hot melt adhesive on the first sealing edge at a side, close to the separator, of a tab of each battery cell of at least one of the first battery cell and the second battery cell is greater than a thickness of a hot melt adhesive on the first sealing edge at a side, away from the separator, of the tab of the battery cell.

2. The battery according to claim 1, wherein a first side of the tab of the first battery cell is a side, close to the separator, of the tab of the first battery cell, a second side of the tab of the first battery cell is a side, away from the separator, of the tab of the first battery cell, and the thickness of the hot melt adhesive on the first sealing edge at the first side of the tab of the first battery cell is greater than the thickness of the hot melt adhesive on the first sealing edge at the second side of the tab of the first battery cell.

3. The battery according to claim 2, wherein the hot melt adhesive on the first sealing edge at the first side of the tab of the first battery cell comprises a first tab adhesive layer, the separator and a first resin layer that are stacked sequentially, and the hot melt adhesive on the first sealing edge at the second side of the tab of the first battery cell comprises a second tab adhesive layer and a second resin layer that are stacked sequentially, wherein the first tab adhesive layer and the second tab adhesive layer are located on both sides of the tab of the first battery cell, and the first resin layer and the second resin layer are film layers, close to the tab of the first battery cell, of the packaging film.

4. The battery according to claim 2 or 3, wherein a ratio of the thickness of the hot melt adhesive on the first sealing edge at the first side of the tab of the first battery cell to the thickness of the hot melt adhesive on the first sealing edge at the second side of the tab of the first battery cell is between 1.01 and 5.

5. The battery according to any one of claims 2 to 4, wherein a difference between the thickness of the hot melt adhesive on the first sealing edge at the first side of the tab of the first battery cell and the thickness of the hot melt adhesive on the first sealing edge at the second side of the tab of the first battery cell ranges from 10 µm to 500 µm.

6. The battery according to any one of claims 1 to 5, wherein a first side of the tab of the second battery cell is a side, away from the separator, of the tab of the second battery cell, a second side of the tab of the second battery cell is a side, close to the separator, of the tab of the second battery cell, and the thickness of the hot melt adhesive on the first sealing edge at the second side of the tab of the second battery cell is greater than the thickness of the hot melt adhesive on the first sealing edge at the first side of the tab of the second battery cell.

7. The battery according to claim 6, wherein the hot melt adhesive on the first sealing edge at the first side of the tab of the second battery cell comprises a third tab adhesive layer and a first resin layer that are stacked sequentially, and the hot melt adhesive on the first sealing edge at the second side of the tab of the second battery cell comprises a fourth tab adhesive layer, the separator and a second resin layer that are stacked sequentially, wherein the third tab adhesive layer and the fourth tab adhesive layer are located on both sides of the tab of the second battery cell, and the first resin layer and the second resin layer are film layers, close to the tab of the second battery cell, of the packaging film.

8. The battery according to claim 6 or 7, wherein a ratio of the thickness of the hot melt adhesive on the first sealing edge at the second side of the tab of the second battery cell to the thickness of the hot melt adhesive on the first sealing edge at the first side of the tab of the second battery cell is between 1.01 and 5.

9. The battery according to any one of claims 6 to 8, wherein a difference between the thickness of the hot melt adhesive on the first sealing edge at the first side of the tab of the second battery cell and the thickness of the hot melt adhesive on the first sealing edge at the second side of the tab of the second battery cell ranges from 10 µm to 500 µm.

10. The battery according to any one of claims 1 to 9, wherein a first side of the tab of the first battery cell is a side, close to the separator, of the tab of the first battery cell, a first side of the tab of the second battery cell is a side, away from the separator, of the tab of the second battery cell, and the thickness of the hot melt adhesive on the first sealing edge at the first side of the tab of the first battery cell is greater than the thickness of the hot melt adhesive on the first sealing edge at the first side of the tab of the second battery cell.

11. The battery according to any one of claims 1 to 10, wherein a second side of the tab of the first battery cell is a side, away from the separator, of the tab of the first battery cell, a second side of the tab of the second battery cell is a side, close to the separator, of the tab of the second battery cell, and the thickness of the hot melt adhesive on the first sealing edge at the second side of the tab of the first battery cell is less than the thickness of the hot melt adhesive on the first sealing edge at the second side of the tab of the second battery cell.

12. The battery according to any one of claims 1 to 11, wherein a first side of the tab of the first battery cell is a side, close to the separator, of the tab of the first battery cell, a second side of the tab of the second battery cell is a side, close to the separator, of the tab of the second battery cell, and the thickness of the hot melt adhesive on the first sealing edge at the first side of the tab of the first battery cell is equal to the thickness of the hot melt adhesive on the first sealing edge at the second side of the tab of the second battery cell.

13. The battery according to any one of claims 1 to 12, wherein a second side of the tab of the first battery cell is a side, away from the separator, of the tab of the first battery cell, a first side of the tab of the second battery cell is a side, away from the separator, of the tab of the second battery cell, and the thickness of the hot melt adhesive on the first sealing edge at the second side of the tab of the first battery cell is equal to the thickness of the hot melt adhesive on the first sealing edge at the first side of the tab of the second battery cell.

14. The battery according to any one of claims 1 to 13, wherein the plurality of sealing edges further comprises a second sealing edge, a third sealing edge and a fourth sealing edge, the second sealing edge and the first sealing edge are disposed opposite to each other, and the third sealing edge and the fourth sealing edge are disposed opposite to each other; and
compression ratios of the first sealing edge, the second sealing edge, the third sealing edge and the fourth sealing edge are all between 3% and 97%.

15. The battery according to any one of claims 1 to 14, wherein the separator comprises a first region recessed toward a bottom of the first film housing, and a distance between the first region and the second film housing is equal to an accommodating depth of the first film housing.

16. The battery according to claim 15, wherein the accommodating depth of the first film housing is greater than an accommodating depth of the second film housing.

17. The battery according to claim 15 or 16, wherein the separator further comprises a second region recessed toward a bottom of the second film housing, and a distance between the second region and the bottom of the first film housing is equal to the distance between the first region and the second film housing.
